# EUROPÄISCHE PATENTANMELDUNG

(11) **EP 1 258 505 A1**
(43) Veröffentlichungstag der Anmeldung: **20.11.2002**
(21) Anmeldenummer: 01112188.6
(22) Anmeldetag: 18.05.2001
(51) Int. Cl.: C08J 11/06, C08L 19/00

(54) **Verbundmaterial**

(71) Anmelder: Formtech AG, 8492 Wila (CH)
(72) Erfinder: Meyer, Helmuth, 6319 Allenwinden (CH)
(74) Vertreter: Patentanwälte Schaad, Balass, Menzl & Partner AG

(57) **Zusammenfassung**

Das flächige biegsame Verbundmaterial enthält Teilchen aus rezykliertem Elastomer sowie Teilchen eines rezyklierten thermoplastischen Kunststoffes. Es eignet sich als mechanisch stabiles Verbundmaterial für den Hoch- und Tiefbau. Die erfindungsgemässen flächigen Verbundmaterialien können mittels Wärmeanwendung allein miteinander verbunden werden.

## Beschreibung

Die Erfindung betrifft ein flächiges biegsames Verbundmaterial gemäss dem Oberbegriff von Anspruch 1 sowie einen Belag, hergestellt aus diesem Verbundmaterial.

Bauschutzmatten oder Verlegebahnen aus Gummi/Polyurethan-Verbundmaterialien sind bekannt und werden im Hochbau und Tiefbau zum mechanischen Schutz von empfindlichen Dichtungsfolien, insbesondere in Dachbelagen, verwendet. Solche Verlegebahnen werden beispielsweise in der CH-A 689 732 beschrieben. Als Gummi im Verbundmaterial dieser Bauschutzmatten wird vor allem Gummischrot aus Autopneus, technischer Gummi, d.h. ein rezykliertes Elastomer, verwendet. Bei der Herstellung der Bauschutzmatten wird das rezyklierte Gummischrot mit einem härtbaren Kleber auf Polyurethanbasis zu einem flächigen Material verbunden. Solche Bauschutzmatten sind stabil, elastisch und mechanisch stark belastbar. Die bahnförmigen Bauschutzmatten werden auf dem Bau mit einem Heisskleber verbunden, um eine lückenlose Abdeckung abgedichteter grösserer Flächen zu gewährleisten. Letztere ist erforderlich, um späteren Schaden z.B. durch eindringende Kieselsteine und von Fremdkörpern vor und/oder während dem Belasten zu vermeiden. Der Heisskleber wird entweder unmittelbar vor dem Verbinden auf die Bauschutzmatten aufgetragen oder die Matten werden beim Hersteller damit versehen. In beiden Fällen sind zusätzlicher Material- und Arbeitsaufwand erforderlich. Ausserdem muss auf die gleichmässige und lückenlose Verteilung des Heissklebers auf den zu verbindenden Flächen geachtet werden, was - insbesondere unter Anwendungsbedingungen - problematisch sein kann.

Aufgabe der vorliegenden Erfindung ist es, eine Bauschutzmatte der eingangs genannten Art vorzuschlagen, die ohne aufwendige Manipulation auf der Baustelle auch unter ungünstigen Bedingungen zu beliebig grossen Gebilden lückenlos verbunden werden kann.

Diese Aufgabe wird erfindungsgemäss durch die Merkmale des kennzeichnenden Teils von Anspruch 1 gelöst.

Durch den Anteil von Teilchen eines rezyklierten thermoplastischen Kunststoffes im erfindungsgemässen Verbundmaterials wird letzterem eine inherente Verklebbarkeit unter Wärmeanwendung verliehen. Diese Verklebbarkeit erlaubt die Verbindung der erfindungsgemässen Verbundmaterialien überlappend und an ihren Stosskanten. Durch die Eliminierung der Überlappung kann eine ins Gewicht fallende Materialeinsparung erzielt und auch bei grossflächigen Abdeckungen ebene Abdeckung erzielt werden.

Die erfindungsgemässen Verbundmaterialien können, da für ihre Verbindung ausser der Erwärmung keine zusätzlichen Mittel oder Arbeitsschritte erforderlich sind, schnell verlegt werden. Das Verlegen kann praktisch bei beliebigen Wetterbindungen, d.h. auch bei tiefer Temperatur, erfolgen. Das für die Verlegung erforderliche Warmluftgebläse oder der Heissföhn ist bei dem Verarbeiten von Dichtungsbahnen ohnehin vorhanden.

Ein weiterer Vorteil der erfindungsgemässen Verbundmaterialien ist es, dass sie sich problemlos mit anderen Baumaterialien, wie Abdichtungen, mittels Wärme verbinden lassen.

Ein grosser Vorteil des erfindungsgemässen Verbundmaterials ist es, dass je nach Menge des eingesetzten thermoplastischen Materials die Stärke der Haftung an der Verbindungsstelle variiert werden kann. Mit niedrigen Mengen an Thermoplast können fest haftende Verbindungen, die jedoch mechanisch wieder gelöst werden können, erhalten werden. Mit hohen Mengen an Thermoplasten werden bei den üblichen Schweiss-Temperaturen bei Folienschweissen durch das Verbinden praktisch einstückige Grossgebilde erhalten, die ohne Beschädigung des Materials mechanisch nicht mehr auftrennbar sind.

Das erfindungsgemässe Verbundmaterial enthält im allgemeinen 20 bis 90%, vorzugsweise mehr als 50%, an rezyklierten Thermoplastteilchen. Für Verbundmaterialien mit hoher Elastizität werden thermoplastische Elastomere bevorzugt, insbesondere Polyurethan. Auch Teilchen von Thermoplastschaum, z.B. Polyethylenschaum, können verwendet werden. Andere geeignete thermoplastische Kunststoffe sind verschiedene Polyethylene, Polypropylene etc..

Das Verbinden der Stoffteilchen zum Verbundmaterial kann im Kalt- oder Warmverfahren erfolgen. Das Kaltverfahren ist immer dann erforderlich, wenn der überwiegende Teil der Kunststoffteilchen aus nicht-thermoplastischen Elastomeren, wie Gummi oder Polyurethan, besteht. Im Kaltverfahren erfolgt das Verbinden der Teilchen mit einem Kleber, vorzugsweise mit einem mit Wasser aktivierbaren Polyurethankleber.

Das Warmverfahren ist anwendbar, wenn der Thermoplastanteil im Verbundmaterial gross genug ist, um den Zusammenhalt der Teilchen im Endprodukt zu gewährleisten. Das Warmverfahren kann z.B. mit geheizten Walzen erfolgen. Dabei entsteht ein Produkt mit feinporiger Oberfläche, was für die meisten Anwendungen vorteilhaft ist. Eine feinporige Oberfläche kann auch durch Kaschieren des Verbundmaterials mit einer Folie, z.B. aus einem Elastomer, erzielt werden.

Das erfindungsgemässe Belagsmaterial kann in Form von Bahnen oder Platten eingesetzt werden. Die Dicke dieser Flächengebilde beträgt je nach Bedarf 2 bis 20 mm (bei Kaschieren auch höher).

Die erfindungsgemässen Verbundmaterialien sind für den Hoch- und Tiefbau geeignet. Sie werden insbesondere zum Schützen der empfindlichen Dichtungsmembrane, im Dach-, Tunnelbau und im übrigen Erdnahbereich eingesetzt.

Das erfindungsgemässe Belagsmaterial kann zur Erzielung zusätzlicher anwendungstechnischer Eigenschaften mit einer Folie kaschiert werden.

Die Erfindung wird durch die nachfolgenden Beispiele weiter veranschaulicht.

### Beispiele 1 bis 4

### Kaltverfahren

Rezykliertes Altpneugranulat, SBR/EPDM wurde mit einem Schrot aus rezykliertem thermoplastischem Polyurethan, TPU (Schuhsolen) vermischt. Danach wurde ein mit Wasser aktivierbares Bindemittel zugemischt. Die erforderliche Wassermenge wurde zuletzt zugegeben. Der Mischvorgang erfolgte bei Raumtemperatur, die sich während des Aushärtungsvorganges erhöhte.

Die Aushärtung erfolgte in einem zylindrischen Gefäss, wobei ein zylindrischer Block von 1200 mm Höhe und 2000 mm Durchmesser erhalten wurde. Aus dem Zylinder wurden mit einer bekannten Einrichtung 2 bis 20 mm dicke Verbundmaterialbahnen abgeschält.

Das oben beschriebene Verfahren wurde mit den nachfolgend angegebenen Zusammensetzungen durchgeführt.

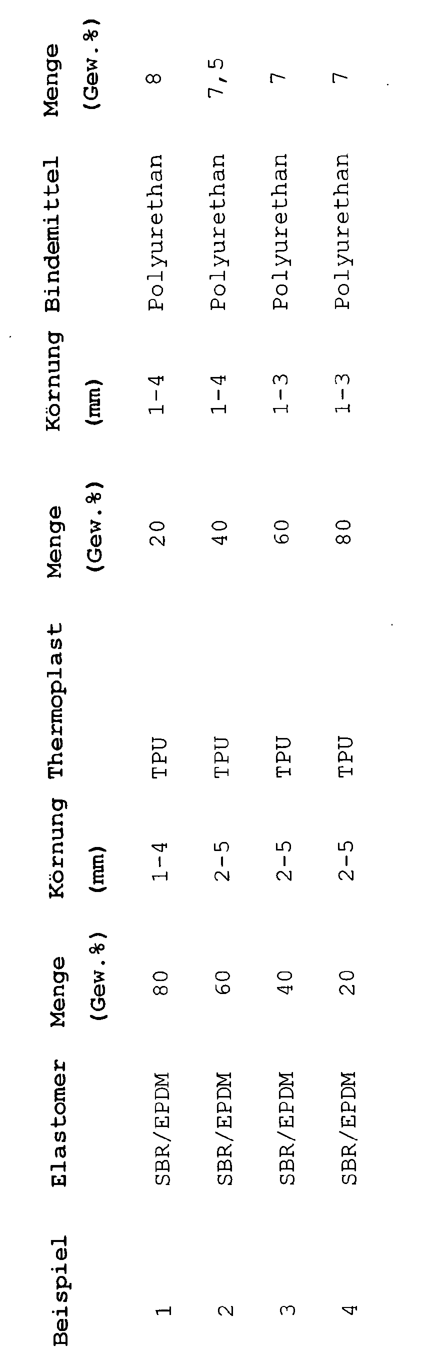

### Beispiel 5

### Warmverfahren

Rezykliertes Altpneugranulat (20%) wurde mit einem Schrot (80%) aus rezykliertem thermoplastischem Polyurethan (Schuhsolen) vermischt. Die Körnung des Altpneugranulates betrug 1 bis 3 mm, jene des thermoplastischen Kunststoffes 1 bis 3 mm. Die Vermischung erfolgte bei Raumtemperatur trocken. Die Mischung wurde dann auf ein Transportband dosiert und verpresst (Temperatur 300 bis 360°C, Druck 50 bis 150 t). Dabei wurde kein zusätzliches Bindemittel verwendet. Die Dicke des Produktes beträgt in Abhängigkeit von der Dosierung 2 bis 40 mm.

Alle nach den obigen Beispielen erhaltenen Materialien wurden problemlos mittels eines Heissluftgebläses (320°C) dauerhaft zu grösseren Gebilden verbunden.

## Patentansprüche

1. Flächiges biegsames Verbundmaterial für den Hoch- und Tiefbau, enthaltend Teilchen eines rezyklierten Elastomeren, **dadurch gekennzeichnet, dass** es zusätzlich Teilchen eines rezyklierten thermoplastischen Kunststoffes enthält und mittels Wärmeanwendung mit einem weiteren Verbundmaterial verbindbar ist.

2. Verbundmaterial nach Anspruch 1, **dadurch gekennzeichnet, dass** es zusätzlich ein Bindemittel auf Polyurethanbasis enthält.

3. Verbundmaterial nach einem der vorangehenden Ansprüche, **dadurch gekennzeichnet, dass** es mehr als 20 Gew.-% an rezykliertem thermoplastischem Kunststoff enthält.

4. Verbundmaterial nach einem der vorangehenden Ansprüche, **dadurch gekennzeichnet, dass** es als rezykliertes thermoplastisches Teilchen Kunststoff eines thermoplastischen Elastomers, vorzugsweise Polyurethans, enthält.

5. Verbundmaterial nach einem der vorangehenden Ansprüche, **dadurch gekennzeichnet, dass** es als rezyklierten thermoplastischen Kunststoff rezyklierte Schaumstoffteilchen enthält.

6. Verbundmaterial nach einem der vorangehenden Ansprüche, **dadurch gekennzeichnet, dass** die Verbundstruktur des rezyklierten Teilchens an seiner Oberfläche sichtbar ist.

7. Verbundmaterial nach einem der vorangehenden Ansprüche, **dadurch gekennzeichnet, dass** es eine feinporige Oberfläche aufweist.

8. Verbundmaterial nach einem der vorangehenden Ansprüche, **dadurch gekennzeichnet, dass** es unter Anwendung von Heissluft mit einem Kunststoff dauerhaft verbindbar ist.

9. Verbundmaterial nach einem der vorangehenden Ansprüche, **dadurch gekennzeichnet, dass** es in Bahnform vorliegt.

10. Verbundmaterial nach einem der Ansprüche 1 bis 7, **dadurch gekennzeichnet, dass** es in Form von Platten vorliegt.

11. Belag im Hoch- und Tiefbau hergestellt aus Verbundmaterial nach einem der vorangehenden Ansprüche, **dadurch gekennzeichnet, dass** er miteinander überlappend verbundene Verbundmaterialbahnen aufweist.

12. Belag im Hoch- und Tiefbau, **dadurch gekennzeichnet, dass** er miteinander an seinen Stosskanten verbundene Verbundmaterialbahnen oder -platten aufweist.
